# EUROPÄISCHE PATENTSCHRIFT

(11) **EP 1 512 040 B1**
(45) Veröffentlichungstag und Bekanntmachung des Hinweises auf die Patenterteilung: **07.02.2007**
(21) Anmeldenummer: 02798311.3
(22) Anmeldetag: 14.11.2002
(51) Int. Cl.: G02C 1/02

(54) **BRILLE INSBESONDERE FASSUNGSLOSE BOHR-BRILLE**
SPECTACLES, PARTICULARLY RIMLESS DRILLED-LENS SPECTACLES
LUNETTES, NOTAMMENT LUNETTES SANS MONTURE A VERRES PERCES

(30) Priorität: 13.06.2002 DE 20209155 U
(43) Veröffentlichungstag der Anmeldung: 09.03.2005
(73) Patentinhaber: Dr. Eugen Beck GmbH & Co., 59302 Oelde (DE)
(72) Erfinder: HAVERKAMP, Helmut, D-46569 Hünxe (DE)
(74) Vertreter: Meinke, Dabringhaus und Partner GbR
(86) Internationale Anmeldenummer: PCT/EP2002/012748
(87) Internationale Veröffentlichungsnummer: WO 2003/107074

(56) Entgegenhaltungen:
- EP-A- 0 643 316
- DE-C- 923 812
- DE-C- 925 915
- US-A- 5 748 280
- US-A- 6 070 978

## Beschreibung

Die Erfindung richtet sich auf eine Brille, insbesondere fassungslose Bohr-Brille, wobei die Brillengläser mit außenrandseitigen Durchgangsbohrungen zur Aufnahme von Bereichen der Nasenbrücke bzw. der ein Element des Bügelscharniers aufweisenden Backen versehen sind.

Es gibt unterschiedliche Brillengestaltungen, sei es, daß die Brillengläser in einem geschlossenen Brillengestell untergebracht sind, sei es, daß nur Teile des Gestells ausgebildet sind und die Brillengläser in der Regel etwa in kreisausschnittförmigen Bögen durch Nylon-Fäden od. dgl. gehalten sind, wie z.B. in DD-372, DD-2062, DE-85 26 267-U, DE-299 19 039-U oder DE-200 02 863-U beschrieben.

Befestigungen über Metalldrähte zeigen die US-5 748 280, US-6 070 978 oder das DE-295 15 008-U, wobei es auch sogenannte gestelllose oder Nur-Glas-Brillen gibt, bei denen der Nasenbügel und die die Brillenbügel tragenden Backen mit den entsprechenden Scharnierelementen in Bohrungen am Brillenglas verschraubt sind. Eine derartige Konstruktion ist beispielsweise aus dem DE-299 01 347-U bekannt. Abgewandelte Gestaltungen zeigen beispielsweise die US-2 588 505, US-5 659 380, US-5 684 559, FR-607 214 oder die WO 97/21133, um nur einige Beispiele zu nennen.

Die Befestigung der Gestellelemente mittels Schrauben unmittelbar an den Brillengläsern führt zwar schon zu sehr guten Ergebnissen, man ist allerdings bemüht, die Befestigung der Gestellelemente so wenig sichtbar wie irgendmöglich zu erreichen.

Hier setzt die Erfindung an, deren Aufgabe darin besteht, eine optisch kaum wahrnehmbare Befestigung der Enden des Nasenbügels einerseits und der Backen bzw. Brillenbügelelemente andererseits zu erreichen.

Bei einer Brille der eingangs bezeichneten Art wird diese Aufgabe gemäß der Erfindung dadurch gelöst, daß jeder Durchgangsbohrung für die Brücken- bzw. Backenelemente je zwei weitere Durchgangsbohrungen zur Durchführung eines diese Elemente an dem Brillenglas fixierenden Kunststoff-Fadens zugeordnet sind.

Die Fixierung der Gestellelemente mit Hilfe von Kunststoff-Fäden, beispielsweise Nylon-Fäden, eröffnet die Möglichkeit, eine extrem filigrane Gestaltung von Nur-Glas-Brillen, da Befestigungselemente kaum noch sichtbar sind. Durch die Möglichkeit, transparente Kunststoff-Fäden einzusetzen wird dieser Effekt noch zusätzlich unterstützt.

Ausgestaltungen der Erfindung ergeben sich aus den Unteransprüchen. Dabei kann vorgesehen sein, daß die Durchgangsbohrungen fluchtend angeordnet sind, wobei die vom Glasrand am weitesten entfernte Bohrung der Aufnahme eines abgewinkelten Endes des die Backen bzw. die Nasenbrücke bildenden Drahtes bildet und die weiteren Durchgangsbohrungen des Durchtritts des Fixierfadens und der Aufnahme des Fixierknotens dienen.

Eine weitere Ausgestaltung der Erfindung besteht darin, daß die der Drahtenden-Aufnahmebohrung benachbarte Bohrung einen Bereich kleineren Durchmessers und einen Bereich größeren Durchmessers zur Aufnahme des Fixierfadenknotens aufweist. Diese Gestaltung macht es möglich, einen leicht vergrößerten Bohrungsbereich im Brillenglas vorzusehen, in dem der Endknoten des Fixierfadens positionierbar ist, so daß vom Faden nichts über die Außenkontur der fixierten Brillengläser hinausragt.

Eine sehr feste Fixierung des Drahtendes an dem jeweiligen Brillenglas läßt sich dadurch erreichen, daß bei Fixierung des in die Durchgangsbohrung eingesetzten Drahtendes der Fixierfaden im Bereich des Außenrandes des Brillenglases den Draht umschlingt, als Doppelfaden in der drahtabgewandten Seite des Brillenglases die erste Durchgangsbohrung durchsetzt, den eingesteckten Draht beidseitig passiert, nach Bildung eines Fadenkreuzes beidseitig außen am Draht vorbei in die weitere Durchgangsbohrung einläuft und in dieser unter Bildung der zur Fixierung notwendigen Spannung verknotet ist.

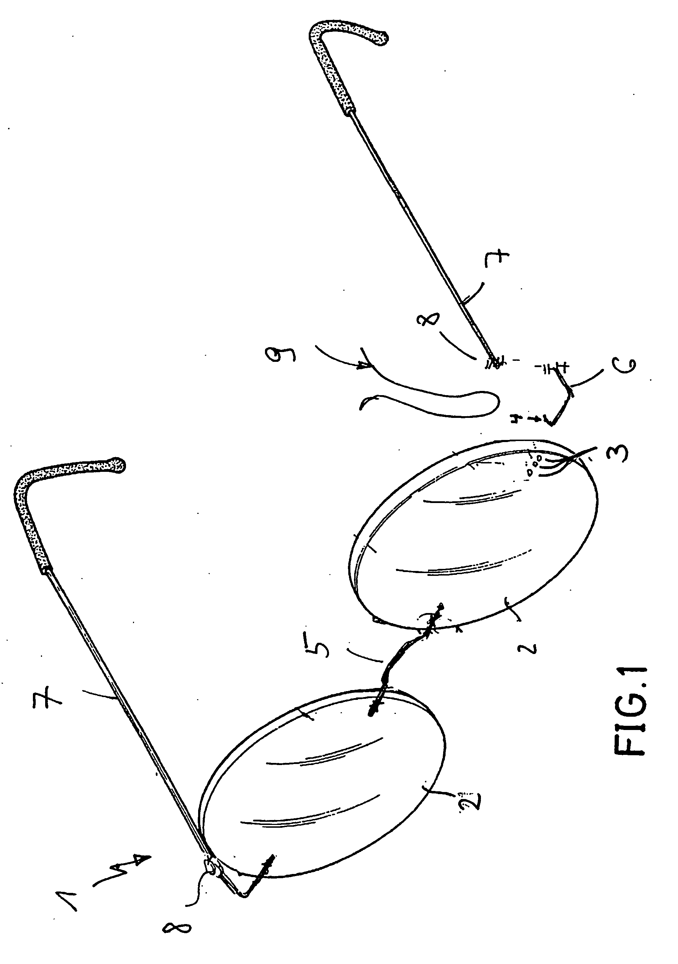

Weitere Merkmale, Einzelheiten und Vorteile der Erfindung ergeben sich aufgrund der nachfolgenden Beschreibung sowie anhand der Zeichnung. Diese zeigt in
- Fig. 1: eine vereinfachte räumliche Darstellung einer erfindungsgemäßen Brille mit fixiertem und losem Brillenbügel sowie in
- Fig. 2: vier Schritte der Knoten- und Fixiertechnik des Befestigungsdrahtes im Randbereich des Brillenglases.

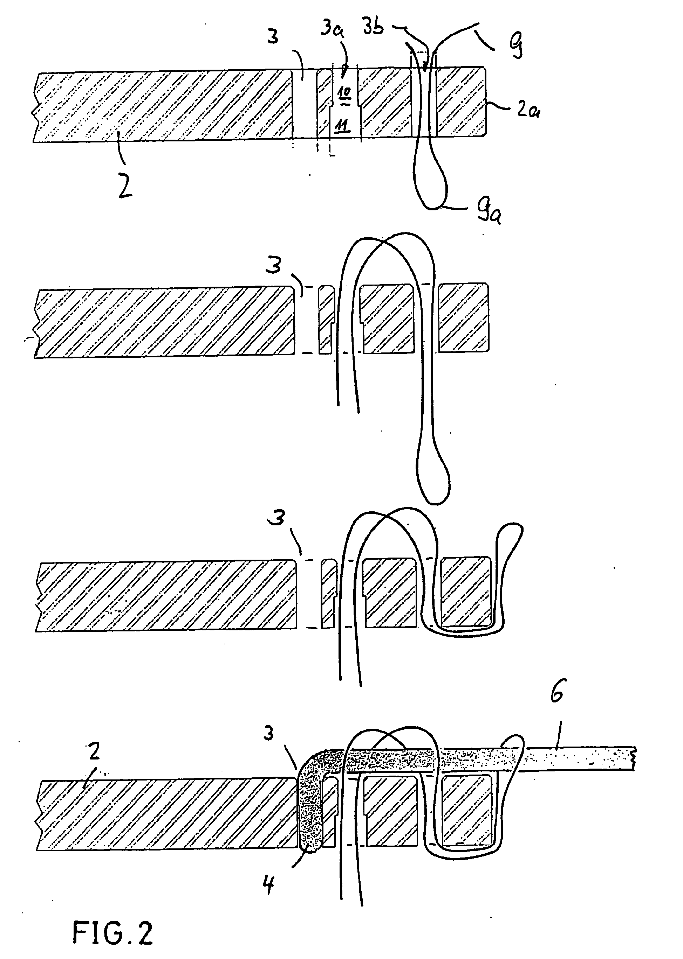

Die allgemein mit 1 bezeichnete Brille ist als sogenannte Nur-Glas-Brille gestaltet, d.h. die mit 2 bezeichneten Gläser weisen keine eigene Fassung auf, vielmehr ist jedes Brillenglas außenrandseitig mit drei allgemein mit 3 bezeichneten Durchgangsbohrungen ausgerüstet, wobei in Fig. 2 diese Durchgangsbohrung zur besseren Unterscheidung mit 3, 3a und 3b bezeichnet sind. Diese Durchgangsbohrungen dienen u.a. zur Aufnahme eines abgewinkelten Endes 4, sei es der mit 5 bezeichneten Nasenbrücke oder sei es dessen mit 6 bezeichneten Elementes des Brillenbügels 7 vor einem nicht näher dargestellten Scharnier 8, auf dessen Gestaltung es hier nicht näher ankommt.

Der Nasenbügel 5 bzw. das Scharnierelement 6 ist dabei mittels eines Nylon-Fadens 9 am Brillenglas 2 fixiert, und zwar in der in Fig. 2 dargestellten Weise. Zunächst wird ein geschlauftes Ende des Nylon-Fadens 9 durch die im Außenrand 2a des Brillenglases 2 am nächsten liegenden Bohrung 3b geführt, die Fäden werden über Kreuz an der Oberfläche des Glases 2 geschlungen und durch die benachbarte Bohrung 3a hindurchgeführt. Die gebildete Schlaufe wird dann um den Außenrand 2a des Glases 2 herumgeschlungen, wie sich dies aus Fig. 2, dritter Abschnitt, ergibt. Nunmehr wird der Bügel bzw. das entsprechende Element z.B. 6 durchgefädelt und mit seinem abgewinkelten Ende 4 in die innere Bohrung 3 eingelegt, der Faden wird strammgezogen und verknotet.

Wie sich insbesondere aus Fig. 2 ergibt, ist die Durchgangsbohrung 3a gestuft ausgebildet, d.h. sie hat einen Bereich kleineren Durchmessers 10, der in Richtung der Außenseite des Brillenglases positioniert ist und einen Bereich größeren Durchmessers, allgemein mit 11 bezeichnet, der zur Aufnahme des nicht näher genannten Knotens dient.

Natürlich ist das beschriebene Ausführungsbeispiel der Erfindung noch in vielfacher Hinsicht abzuwandeln, ohne den Grundgedanken zu verlassen. So kann beispielsweise nachträglich über die beiden zu verknotenden Fadenenden eine kleine Scheibe geschoben werden, die sich an der Kante des Überganges vom Bohrungsbereich 11 zum Bohrungsbereich 10 legt, um den Knoten fester zu fixieren, die Nasenbügelformen können jede beliebige, bei Brillen übliche Art einnehmen, ebenso wie die Scharniere u. dgl.

## Patentansprüche

1. Brille, insbesondere fassungslose Bohr-Brille (1) mit Gläsern, einer Nasenbrücke (5) und ein Element (6) des Bügelscharniers (8) aufweisenden Backen, wobei die Brillengläser (2) mit außenrandseitigen Durchgangsbohrungen (3) zur Aufnahme von Bereichen der Nasenbrücke (5) bzw. der Backen versehen sind,
**dadurch gekennzeichnet,**
**daß** jeder Durchgangsbohrung (3) für die Brücken- bzw. Bakkenbereiche je zwei weitere Durchgangsbohrungen (3a,3b) zugeordnet sind, durch welche ein Kunststofffaden geführt ist, mit dem die Backen bzw. die Nasenbrücke an den Gläsern fixiert sind.

2. Brille nach Anspruch 1,
**dadurch gekennzeichnet,**
**daß** die Durchgangsbohrungen (3-3b) fluchtend angeordnet sind, wobei die vom Glasrand (2a) am weitesten entfernte Bohrung (3) der Aufnahme eines abgewinkelten Endes (4) eines die Backen (6) bzw. die Nasenbrücke (5) bildenden Drahtes und die weiteren Durchgangsbohrungen (3a,3b) dem Durchtritt des Fixierfadens (9) und der Aufnahme eines Fixierknotens dienen.

3. Brille nach Anspruch 2,
**dadurch gekennzeichnet,**
**daß** die der Drahtenden-Aufnahmebohrung (3) benachbarte Bohrung (3a) einen Bereich (10) kleineren Durchmessers und einen Bereich (11) größeren Durchmessers zur Aufnahme des Fixierfadenknotens aufweist.

4. Brille nach einem der Ansprüche 2 oder 3,
**dadurch gekennzeichnet,**
**daß** zur Fixierung des in die Durchgangsbohrung (3) eingesetzten Drahtendes (4-6) der Fixierfaden (9) im Bereich des Außenrandes (2a) des Brillenglases (2) den Draht umschlingt, als Doppelfaden an der drahtabgewandten Seite des Brillenglases (2) zur ersten Durchgangsbohrung (3b) geführt wird, diese durchsetzt, den eingesteckten Draht beidseitig passiert, nach Bildung eines Fadenkreuzes beidseitig außen am Draht vorbei in die weitere Durchgangsbohrung (3b) einläuft und in dieser unter Bildung der zur Fixierung notwendigen Spannung verknotet ist.

## Claims

1. A pair of spectacles, in particular frameless drilled spectacles (1), having lenses, a bridge (5) for the nose and endpieces which include an element (6) of the sidepiece hinge (8), in which the spectacle lenses (2) are provided with through bores (3) at the outer rim for the purpose of receiving regions of the nose bridge (5) or the endpieces, **characterised in that** there are associated with each through bore (3) for the bridge or endpiece regions in each case two further through bores (3a, 3b) through which a synthetic thread is guided, the latter being used to fix the endpieces or nose bridge to the lenses.

2. A pair of spectacles according to Claim 1, **characterised in that** the through bores (3 - 3b) are arranged to be flush, with the bore (3) furthest away from the lens rim (2a) serving to receive an angled end (4) of a wire which forms the endpieces (6) or the nose bridge (5), and the further through bores (3a, 3b) serving for the passage of the fixing thread (9) and for receiving a fixing knot.

3. A pair of spectacles according to Claim 2, **characterised in that** the bore (3a) adjacent to the bore (3) receiving the wire end has a region (10) of relatively small diameter and a region (11) of relatively large diameter for receiving the fixing thread knot.

4. A pair of spectacles according to either of Claims 2 or 3, **characterised in that**, for the purpose of fixing the wire end (4 - 6) inserted into the through bore (3), the fixing thread (9) is looped around the wire in the region of the outer rim (2a) of the spectacle lens (2), is guided as a double thread on that side of the spectacle lens (2) remote from the wire to the first through bore (3), passes through the latter, runs on either side of the inserted wire, crosses on either side on the outside and then runs past the wire and into the further through bore (3b) and is knotted inside this to create the tension required for fixing.

## Revendications

1. Lunettes, en particulier lunettes sans monture à verres percés (1), avec des verres, un support nasal (5) et des mâchoires présentant un élément (6) de la charnière d'étrier (8), les verres de lunette (2) comportant des alésages de passage marginaux externes (3) destinés à recevoir les parties du support nasal (5) ou la mâchoire, **caractérisées en ce qu'**à chaque alésage de passage (3) pour les parties de support nasal ou de mâchoires sont respectivement affectés deux alésages de passage (3a,3b), par lesquels est mené un fil en matière synthétique avec lequel sont fixés aux verres les mâchoires ou le support nasal.

2. Lunettes selon la revendication 1, **caractérisées en ce que** les alésages de passage (3-3b) sont agencés en alignement, tandis que l'alésage (3) le plus éloigné du bord de verre (2a) sert à recevoir une extrémité (4) coudée d'un fil métallique formant les mâchoires (6) ou support nasal (5) et les autres alésages de passage (3a,3b) servent à introduire le fil de fixation (9) et à recevoir un noeud de fixation.

3. Lunettes selon la revendication 2, **caractérisées en ce que** l'alésage (3a) avoisinant l'alésage de réception d'extrémité du fil métallique (3) présente une zone (10) de plus petit diamètre et une zone (11) de plus grand diamètre pour la réception du noeud du fil de fixation.

4. Lunettes selon l'une des revendications 2 ou 3, **caractérisées en ce que** pour la fixation de l'extrémité du fil métallique (4-6) insérée dans l'alésage de passage (3), au niveau du bord extérieur (2a) du verre de lunettes (2), le fil de fixation (9) enserre le fil métallique, en tant que double fil sur le côté détourné du fil métallique du verre de lunettes (2) il est amené sur le premier alésage (3b) et traverse celui-ci, passe sur les deux côtés le fil métallique inséré, après formation d'une croix des deux côtés extérieurement au fil métallique entre dans l'autre alésage de passage (3b) et se trouve noué dans celui-ci en formant une tension nécessaire à la fixation.
